# EUROPÄISCHE PATENTANMELDUNG

(11) **EP 1 727 126 A1**
(43) Veröffentlichungstag der Anmeldung: **29.11.2006**
(21) Anmeldenummer: 04028177.6
(22) Anmeldetag: 26.11.2004
(51) Int. Cl.: G10K 15/06, G10K 11/00

(54) **Verfahren und Vorrichtung zum prüfen einer Stosswellenerzeugungseinrichtung**

(71) Anmelder: HealthTronics Inc., Marietta GA 30062 (US)
(72) Erfinder: Simnacher, Erwin, 78479 Reichenau (DE)
(74) Vertreter: Mussgnug, Bernd

(57) **Zusammenfassung**

Vorrichtung zum Prüfen einer Stosswellenquelle in einem die Stosswellenausbreitung begünstigendem Medium, die so ausgeführt ist, dass wenigstens ein PZT- Dünnschichtelement bestehend aus einer auf einem Trägermaterial aufgebrachten PZT - Dünnschicht in der Weise in einem Stosswellenfeld angeordnet ist, dass die Stosswellen auf das wenigstens eine PZT- Dünnschichtelement treffen, und eine durch eine mechanische Verformung des wenigstens einen PZT Dünnschichtelementes erzeugte elektrische Messgrösse als Kenngrösse der einwirkenden Stosswellen erfasst und in einer Auswerteeinrichtung verarbeitet wird.

## Beschreibung

Die Erfindung betrifft ein Verfahren und eine Vorrichtung zum Prüfen einer Stosswellenerzeugungseinrichtung gemäss dem Oberbegriff des Anspruchs 1.

Stosswellenerzeugungseinrichtungen werden in der Human- und veterinärmedizin für unterschiedliche Zwecke eingesetzt. Eine medizinische Anwendung der Stosswellenerzeugungseinrichtungen in der Humanmedizin liegt in der Lithotripsie, bei der die erzeugten Stosswellen auf zu zerstörende innere Objekte, wie Nierensteine fokussiert werden. Weitere Anwendungen bestehen beispielsweise in der Induzierung von Knochenwachstum, der Behandlung von orthopädisch schmerzhaften Erkrankungen (Epicondylitis, Kalkschulter) und der Behandlung von Nerven, Muskeln und anderen Weichteilstrukturen.

Dabei werden die Stosswellenerzeugungseinrichtungen mittels einer Applikationsfläche an den Körper eines Patienten appliziert, um die erzeugten Stosswellen in den Körper eines Patienten einzuleiten.

Die Stosswellenerzeugungseinrichtungen müssen einerseits einer regelmässigen Überprüfung unterzogen werden, um zu gewährleisten, dass die Stosswellenparameter der erzeugten akustischen Stosswellen innerhalb gewisser Grenzen liegen, die für den bestimmungsgemässen Gebrauch der Stosswellen vorgegeben sind. Andererseits ist für eine Zulassung einer neunen Stosswellenerzeugungseinrichtung eine Bestimmung und Dokumentation der Stosswellenparameter erforderlich.

Zur Vermessung der Stosswellenparameter eines fokussierten Stosswellenfeldes ist aus der DE 35 45 381 A1 ein Polyvinylidenfluorid(PVDF) - Membranhydrophon mit auf eine Elektretfolie aufgebrachten Metallelektroden bekannt. Die Stosswellen der Stosswellenerzeugungseinrichtung zerstören jedoch meist schon sehr schnell das PVDF - Membranhydrophon. Die Metallisierung löst sich unter den Stosswellenpulsen langsam ab und das Membranhydrophon wird nach einigen hundert Stosswellenimpulsen unempfindlich. Zudem sind piezokeramische Sensoren bekannt, die flächen- oder kugelschalenförmig am Ende einer in der Regel koaxialen elektrischen Zuleitung angeordnet sind. Im Vergleich zu den Membranhydrophonen sind die piezokeramische Sensoren weniger empfindlich.

In der DE 196 40 050 und der DE 19 640 051 sind eine weitere Vorrichtung und ein Verfahren der eingangs genannten Gattung beschrieben. Hierbei wird ein Drucksensor in ein Feld der Stosswellen gebracht, unmittelbar durch die Amplituden der Stosswellen beaufschlagt und ein elektrisches Ausgangssignal des Drucksensors als Referenz zur Überprüfung der Stosswellenparameter genutzt. Aus der DE 38 02 024 ist es bekannt, einen Lichtleiter in Form einer Glasfaser mit einem Ende in das akustischen Stosswellenfeld zu positionieren und eine Änderung einer Reflexion des Lichtes an der Grenzfläche zwischen dem Ende des Lichtleiters und einem flüssigen Medium zur Ausbreitung der Stosswellen zu bestimmen. Die Lichtreflexion an dem Ende des Lichtleiters ist über den Brechungsindex - Dichte - Zusammenhang mit der Druckamplitude in dem flüssigen Medium verknüpft. Bei Druckanstieg wird die Dichte und damit der Brechungsindex in der Flüssigkeit erhöht. Über die Änderung der Reflexion kann somit der Druck in dem flüssigen Medium bestimmt werden. Die Endfläche der Lichtleiter-Sonde wird unmittelbar durch den Druck der Stosswellen beaufschlagt, so dass die Sonde einer hohen mechanischen Beanspruchung ausgesetzt ist und damit die Lebensdauer stark reduziert ist. Zudem ist die Grösse der Messfläche vordefiniert.

Zur Vermessung des Stosswellenfeldes muss die Sonde an verschiedenen Positionen im Feld positioniert werden. Eine Flächenvermessung gestaltet sich somit sehr aufwendig.

Eine Weiterentwicklung der Vorrichtung und des Verfahrens ist in "Medical Solution" (1/2004) beschrieben. Hierbei wird Licht über einen Lichtleiter auf einen im Ausbreitungsmedium der Stosswelle befindlichen Glassblock geleitet und an der Grenzschicht Glas/Ausbreitungsmedium reflektiert. Das reflektierte Licht wird von einem Sensor erfasst. Die Reflexion ändert sich dabei bei Einwirkung der Stosswellen und damit variiert die Intensität des auf den Sensor auftreffenden Lichtes. Anhand einer von dem Sensor detektierten Lichtintensität wird der Druck der Stosswelle ermittelt. Eine zweidimensionale Vermessung einer Stosswelle ist mit den bekannten Verfahren nicht möglich. Gleichfalls ist eine Anwendung in Echtzeit, beispielsweise während der Behandlung von Patienten, nur unter sehr grossem Aufwand realisierbar.

Vor dem Hintergrund der vorstehenden Ausführung liegt der Erfindung die Aufgabe zugrunde, eine Vorrichtung zum Prüfen einer Stosswellenerzeugungseinrichtung der eingangs genannten Gattung zu schaffen, die einfach und kostengünstig herzustellen ist, zuverlässig in der Anwendung, zudem hinsichtlich der Baugrösse flexibler gestaltet werden kann und eine zweidimensionale Vermessung einer Stosswelle ermöglicht.

Diese Aufgabe wird erfindungsgemäss gelöst durch ein Verfahren mit den Merkmalen des Anspruch 1 bzw. einer Vorrichtung mit den Merkmalen des Anspruches 4

Vorteilhafte Ausführungen der Erfindung sind in den Unteransprüchen angegeben.

Der wesentliche Gedanke der Erfindung besteht darin, eine Vorrichtung zum Prüfen einer Stosswellenquelle in einem die Stosswellenausbreitung begünstigendem Medium dahingehend auszuführen, dass wenigstens ein PZT- Dünnschichtelement, bestehend aus einer auf einem Trägermaterial aufgebrachten PZT - Dünnschicht, in der Weise in einem Stosswellenfeld angeordnet ist, dass die Stosswellen auf das wenigstens eine PZT- Dünnschichtelement treffen, und eine durch eine mechanische Verformung des wenigstens einen PZT Dünnschichtelementes erzeugte elektrische Messgrösse als Kenngrösse der einwirkenden Stosswellen erfasst und in einer Auswerteeinrichtung verarbeitet wird.

PZT- Dünnschichten sind aus der EP 961 02 532 bekannt. Es handelt sich hierbei um dünne Schichten aus Bleizirkonattitanat, kurz PZT genannt. Verwendung finden die piezoelektrischen Dünnschichtelemente in der Druckgeräteindustrie, speziell in der Anwendung als Betätigungselemente in Tintenstrahlaufzeichungsgeräten.

In dem erfindungsgemässen Verfahren bzw. der Vorrichtung wird für die Detektierung der Stosswellen der direkte piezoelektrische Effekt der PZT- Dünnschichtelemente genutzt. Unter Einwirkung einer mechanischen Spannung entstehen an einer Oberfläche eines piezoelektrischen Dünnschichtelementes elektrische Ladungen. Diese elektrischen Ladungen werden als Messgrösse der Stosswellenparameter erfasst, weiterverarbeitet und ausgewertet.

Im Gegensatz zum Stand der Technik besitzen die PZT - Dünnschichtelemente eine sehr dünne Schichtdicke, durch welche die Stosswellenamplituden nur gering beeinflusst werden, bei gleichzeitig erhöhter Haltbarkeit und einer grösseren Empfindlichkeit. Somit wird auch eine Messung in Echtzeit, also während der Behandlung von Patienten möglich.

Zudem sind höhere Frequenzen der Stosswellen mit den PZT - Dünnschichtelementen messbar. Gegenüber herkömmlichen Piezokristallen ist bei den PZT - Dünnschichtelementen ein schnelleres Ansprechen auf die Stosswellenpulse zu verzeichnen. Die PZT - Dünnschichtelemente weisen ein gutes Signal/Rausch-Verhältnis auf, das heisst es wird ein höheres Messsignal im Vergleich zu herkömmlichen Messvorrichtung bei gleichem Druckpuls erzielt.

In einer bevorzugten Ausführung der erfindungsgemässen Vorrichtung sind mehrere PZT Dünnschichtelemente räumlich im Stosswellenfeld angeordnet. Die mehreren PZT Dünnschichtelemente können dabei aneinandergrenzend angeordnet sein. Gegenüber dem Stand der Technik ermöglicht eine derartige Anordnung eine flächenförmige zweidimensionale Vermessung einer Stosswelle. Die mehreren PZT Dünnschichtelemente können zusätzlich matrixförmig im Stosswellenfeld positioniert sein.

Gemäss einer besonders bevorzugten Ausführungsform der Erfindung sind die mehreren PZT Dünnschichtelemente elektrisch voneinander entkoppelt und mit einem Speicher verbunden. Die Werte können somit zwischengespeichert und nachfolgend ausgewertet und dargestellt werden. Im Speziellen lassen sich somit zweidimensionale Druckbilder darstellen. Die elektrische Messgrösse, als Kenngrösse der einwirkenden Druckamplitude wird für die Beurteilung der einwirkenden Druckamplitude ausgewertet. Die Messgrösse kann gleichzeitig für eine Beurteilung der Energie der Stosswelle verwendet werden.

Erfindungsgemäss kann die Stosswellenerzeugungseinrichtung auch unter den Bedingungen geprüft werden, die dem tatsächlichen Einsatz entsprechen. Hierzu wird das wenigstens eine PZT- Dünnschichtelement in der Grenzfläche zwischen dem der Stosswellenausbreitung begünstigendem Medium und einer Koppelmembran, die zur Einkopplung der Stosswellen in den Körper des Patienten vorgesehen ist, angeordnet. Ein Energieverlust der Stosswelle ist aufgrund der dünnen Schicht des Elementes gering.

Gemäss einer weiteren bevorzugten Ausführungsform der Erfindung ist das wenigstens eine PZT - Dünnschichtelement derart ausgeführt, dass die Fläche des Elements der Grösse der Querschnittesfläche des Stosswellenfokus entspricht.
Unter dem Begriff "Stosswellenfokus" soll hier der Bereich des höchsten Druckes zu verstehen sein.
Die Fokusebene der Stosswelle kann somit vermessen werden.

Zur Erzielung einer zweidimensionalen Abbildung einer Stosswelle können auch mehrere PZT- Dünnschichtelemente bevorzugt kreisförmig angeordnet sein. Der Durchmesser des äusseren Kreises entspricht in etwa dem Durchmesser der Fokusebene. Die Fläche der einzelnen PZT - Dünnschichtelemente wird hierzu hinreichend klein gewählt, so dass innerhalb der Elemente ein nahezu konstanter Druck zu verzeichnen ist.

Eine Beschädigung des Messsystems durch die Einwirkung der Stosswellen ist im Vergleich zu den bekannten Vorrichtungen reduziert.

Im Folgenden wird die Erfindung anhand von in zwei Zeichnung dargestellten Ausführungsbeispielen näher erläutert. Es zeigen:
- Figur 1: Blockschaltbild der erfindungsgemässen Vorrichtung in einer ersten Ausführung und
- Figur 2: Blockschaltbild der erfindungsgemässen Vorrichtung in einer zweiten Ausführung.

Die beiden Ausführungsbeispiele sind schematisch und stark vereinfacht dargestellt.

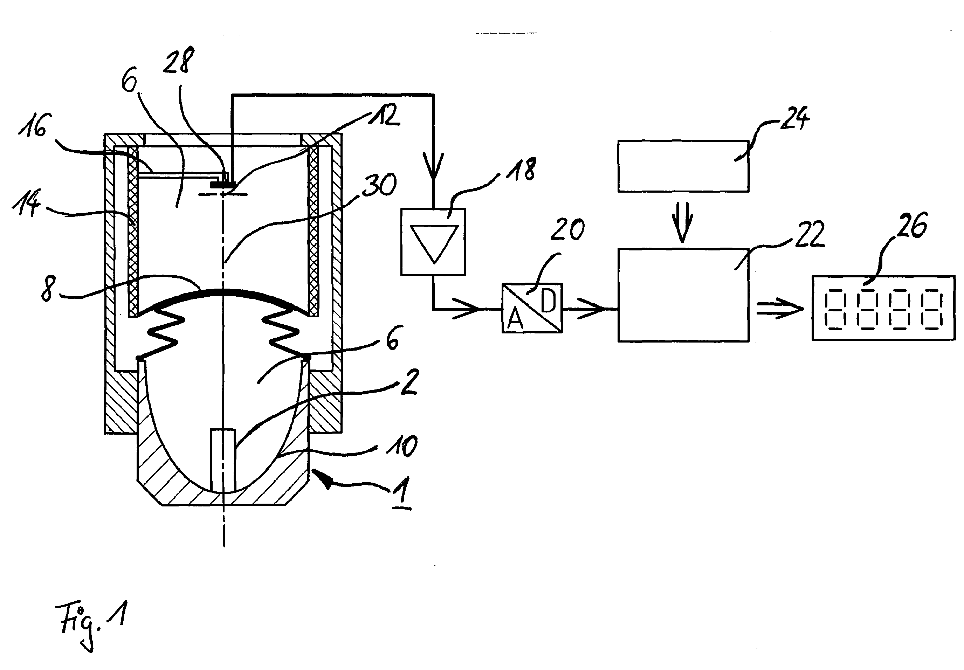

In Figur 1 ist eine Stosswellenerzeugungseinrichtung 1 gezeigt, die eine die Stosswellen erzeugende Einheit 2 und ein für die Stosswellenübertragung geeignetes Medium 6 aufweist, welches ein Volumen zwischen der die Stosswellen erzeugenden Einheit 2 und einer Koppelmembran 8 ausfüllt. Als für die Stosswellenübertragung geeignetes Medium 6 wird beispielsweise Wasser verwendet. Die Koppelmembran 8 dient der energetisch verlustarmen Ankopplung der Stosswellenerzeugungseinrichtung 1 an ein zu behandelndes Körperteil.

Die Stosswellen werden von der die Stosswellen erzeugenden Einheit 2, beispielsweise nach dem elektro-hydraulischen Prinzip generiert und breiten sich in Richtung Koppelmembran 8 aus. Weitere Erzeugungsprinzipien der Stosswellen sind nicht ausgeschlossen. Die generierten Stosswellen werden basierend auf einem zur Fokussierung der Stosswellen geeignetem Mittel 10, beispielsweise anhand der vorgegebenen Geometrie eines Ellipsoiden, in einem Stosswellenfokus 12 gebündelt. Der Stosswellenfokus 12 ist der Bereich mit dem höchsten Druck. Zur Prüfung der Parameter der Stosswellenerzeugungseinrichtung 1 wird an diese die erfindungsgemässe Vorrichtung angebracht. Dazu wird auf die Membran 8 der Stosswellenerzeugungseinrichtung 1 eine Befestigungseinrichtung 14 lösbar aufgebracht. Nun wird ein PZT- Dünnschichtelement 28, welches aus einer auf einem Trägermaterial aufgebrachten PZT - Dünnschicht besteht in der Befestigungseinrichtung 14 mittels einer Halterung 16 gehalten. Die Halterung 16 ist derart ausgebildet, dass das PZT - Dünnschichtelement 28 eine definierte Lage auf einer von der die Stosswellen erzeugenden Einheit 2 zum Stosswellenfokus 12 gebildeten Achse 30 einnimmt und die Stosswellen auf das PZT -Dünnschichtelement 28 auftreffen können. Das PZT - Dünnschichtelement 28 ist elektrisch mit einer Verstärkereinheit 18 verbunden. Die beim Auftreffen der Stosswellen auf das PZT - Dünnschichtelement 28 erzeugte elektrische Messgrösse wird der Verstärkereinheit 18 zugeführt. Das Ausgangssignal der Verstärkereinheit 18 ist einer Analog/Digital Einheit 20 zugeführt, dessen digitale Ausgangsdaten auf eine Auswerteeinrichtung 24 geleitet werden. In der Auswerteeinrichtung 22 werden die Kenngrössen der einwirkenden Stosswellen ermittelt und im Anschluss auf einer Anzeigeeinheit 26 digital dargestellt. Anhand von bekannten Referenzwerten einer Referenzeinheit 24 kann festgestellt werden, ob die zu prüfende Stosswellenerzeugungseinrichtung 1 die Prüfkriterien erfüllt. Eine Anzeige der Prüfergebnisse mittels digitaler Anzeigeeinheit 26 ist nur beispielhaft zu verstehen. Die Anzeige, ob die zu prüfende Stosswellenerzeugungseinrichtung 1 die Prüfkriterien erfüllt, kann auch auf andere Weise erfolgen.

In einer weiteren Ausgestaltung der erfindungsgemässen Vorrichtung können die digitalen Signale der Analog/Digital Einheit 20 mit Referenzsignalen von einer Referenzeinheit 24 verarbeitet werden. Die Auswerteeinrichtung 22 kann eine Reihe von Messwerten verschiedener Stosswellen zwischenspeichern, die im Anschluss miteinander verarbeitet und statistisch ausgewertet werden können.

Zur Prüfung der Stosswellenerzeugungseinrichtung 1 wird wie folgt vorgegangen:

Die Auswerteeinrichtung 22 und die Anzeigeeinheit 26 werden in einen definierten Ausgangszustand versetzt. Im Anschluss werden Stosswellen von der die Stosswellen erzeugenden Einheit 2 generiert, die sich in dem für die Stosswellenausbreitung geeigneten Medium 6 ausbreiten und mittels dem zur Fokussierung der Stosswellen geeigneten Mittel 10 in dem Stosswellenfokus 12 gebündelt werden. Hier treffen die Stosswellen auf das wenigstens eine PZT - Dünnschichtelement 28, das mittels der Halterung 16 in dem Stosswellenfeld, vorzugsweise im Bereich des höchsten Druckes, positioniert ist. Die durch die Einwirkung der Stosswellen erzeugten elektrischen Messgrössen werden als Kenngrösse der einwirkenden Stosswellen erfasst, in der Auswerteeinrichtung 22 verarbeitet und auf der Anzeigeeinheit 26 angezeigt.

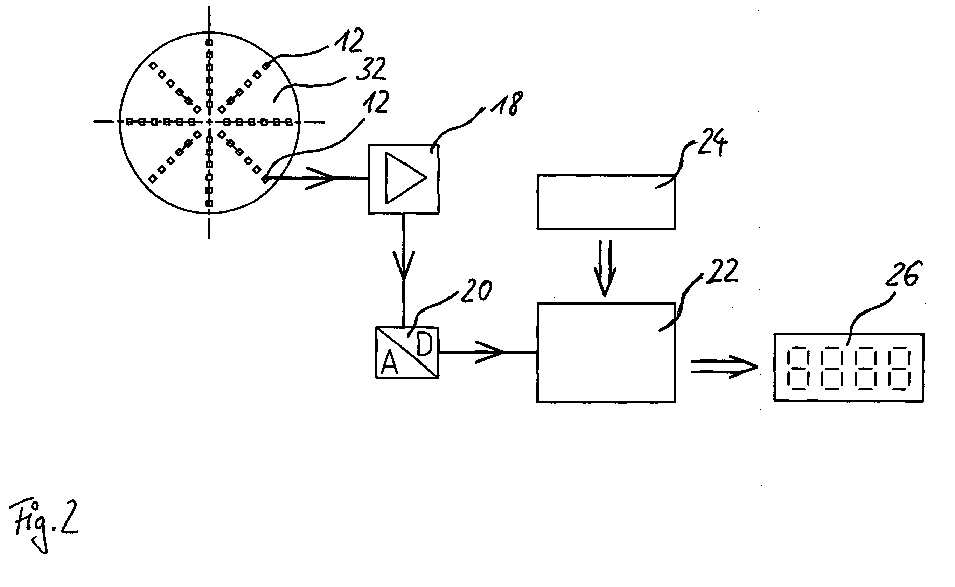

Mit einer weiteren Ausgestaltung der erfindungsgemässen Vorrichtung, die in Figur 2 gezeigt ist, kann eine Stosswelle zeitgleich flächenförmig vermessen werden. Dazu sind vorzugsweise auf einem geeigneten Trägersubstrat 32 mehrere PZT - Dünnschichtelemente 28 aneinandergrenzend angeordnet. Die mehreren PZT - Dünnschichtelemente 28 sind matrixförmig strukturiert. Sie sind kreisförmig angeordnet, wobei der seitliche Abstand der Elemente 28 zueinander in Richtung Kreiszentrum verringert ist. Die Elemente 28 sind elektrisch voneinander entkoppelt und mit einem nicht dargestellten Speicher versehen. Die Speicherelemente können beispielsweise in Form einer Kondensatormatrix vorgesehen sein. Die Werte des Speichers werden nacheinander ausgelesen und in einer Auswerteeinrichtung 22 verarbeitet. Mittels einer Anzeigeeinheit 26 werden die Parameter der Stosswelle dargestellt. Dies kann in Form von Werten oder aber auch in einer weiteren Ausgestaltung grafisch vorgesehen sein. Auch in dieser Ausgestaltung der erfindungsgemässen Vorrichtung können die Parameter von mehreren Stosswellen zwischengespeichert und miteinander statistisch ausgewertet werden.

### Bezugszeichenliste

- 1: Stosswellenerzeugungseinrichtung
- 2: Stosswellen erzeugende Einheit
- 6: Für die Stosswellenausbreitung geeignetes Medium
- 8: Koppelmembran
- 10: Zur Fokussierung der Stosswellen geeignetes Mittel
- 12: Stosswellenfokus
- 14: Befestigungseinrichtung
- 16: Halterung
- 18: Verstärkereinheit
- 20: Analog/Digital Einheit
- 22: Auswerteeinrichtung
- 24: Referenzeinheit
- 26: Anzeigeeinheit
- 28: PZT - Dünnschichtelement
- 30: Achse zwischen einer die Stosswellen erzeugenden Einheit und einem Stosswellenfokus
- 32: Trägersubstrat

## Patentansprüche

1. Verfahren zum Prüfen einer Stosswellenerzeugungseinrichtung in einem die Stosswellenausbreitung begünstigendem Medium
**dadurch gekennzeichnet,**
**dass** die Stosswellen auf wenigstens ein PZT-Dünnschichtelement (28) treffen und eine durch eine mechanische Verformung des wenigstens einen PZT-Dünnschichtelementes (28) erzeugte elektrische Messgrösse als Kenngrösse der einwirkenden Stosswellen erfasst und ausgewertet wird.

2. Verfahren nach Anspruch 1
**dadurch gekennzeichnet**,
das verschiedene Positionen des Stosswellenfeldes erfasst werden.

3. Verfahren nach Anspruch 1
**dadurch gekennzeichnet,**
**dass** die elektrische Messgrösse zwischengespeichert wird.

4. Vorrichtung zum Prüfen einer Stosswellenerzeugungseinrichtung in einem die Stosswellenausbreitung begünstigendem Medium
**dadurch gekennzeichnet,**
**dass** wenigstens ein PZT- Dünnschichtelement (28) aus einer auf einem Trägermaterial aufgebrachten PZT - Dünnschicht vorgesehen und in der Weise in einem Stosswellenfeld angeordnet ist, dass die Stosswellen auf das wenigstens eine PZT- Dünnschichtelement (28) treffen, und eine durch eine mechanische Verformung des wenigstens einen PZT Dünnschichtelementes (28) erzeugte elektrische Messgrösse als Kenngrösse der einwirkenden Stosswellen erfasst und in einer Auswerteeinrichtung (22) verarbeitet wird.

5. Vorrichtung nach Anspruch 4,
**dadurch gekennzeichnet,**
**dass** das wenigstens eine PZT Dünnschichtelement (28) räumlich an verschiedenen Positionen in dem Stosswellenfeld positionierbar ist.

6. Vorrichtung nach Anspruch 4,
**dadurch gekennzeichnet,**
**dass** mehrere PZT - Dünnschichtelemente (28) räumlich in dem Stosswellenfeld angeordnet sind.

7. Vorrichtung nach Anspruch 6,
**dadurch gekennzeichnet,**
**dass** die mehreren PZT - Dünnschichtelemente (28) aneinandergrenzend angeordnet sind.

8. Vorrichtung nach Anspruch 7,
**dadurch gekennzeichnet,**
**dass** die mehreren PZT - Dünnschichtelemente (28) matrixförmig in dem Stosswellenfeld angeordnet sind.

9. Vorrichtung nach Anspruch 6,
**dadurch gekennzeichnet,**
**dass** die mehreren PZT - Dünnschichtelemente (28) elektrisch voneinander entkoppelt und mit einem Speicher verbunden sind.

10. Vorrichtung nach Anspruch 4,
**dadurch gekennzeichnet,**
**dass** die Grösse des wenigstens einen PZT-Dünnschichtelementes (28) der Grösse der Querschnittsfläche eines Stosswellenfokus (12) entspricht.

11. Vorrichtung nach Anspruch 6,
**dadurch gekennzeichnet,**
**dass** die mehreren PZT- Dünnschichtelemente (28) kreisförmig angeordnet sind.

12. Verwendung von wenigstens einem PZT - Dünnschichtelement (28) zur Messung von Stosswellenkenngrössen.
